# EUROPÄISCHE PATENTANMELDUNG

(11) **EP 0 607 813 A1**
(43) Veröffentlichungstag der Anmeldung: **27.07.1994**
(21) Anmeldenummer: 94100143.0
(22) Anmeldetag: 07.01.1994
(51) Int. Cl.: B60R 13/06, B60J 10/00

(54) **Verformbares Gerüstband für Gummi- und/oder Kunststoffklemmprofile und ein mit diesem hergestelltes Klemmprofil**

(30) Priorität: 19.01.1993 DE 9300601 U
(71) Anmelder: Hutchinson Gummiwarenfabrik GmbH, D-68169 Mannheim (DE)
(72) Erfinder: Hartl, Alfred, D-67065 Ludwigshafen (DE)
(74) Vertreter: Ratzel, Gerhard, Dr.

(57) **Zusammenfassung**

Ein verformbares Gerüstband (1) für Gummi- und/oder Kunststoffklemmprofile, ist zumindest teilweise innerhalb des verwendeten Profilmaterials zum Zwecke des Verformungsverhaltens des Fertigprofils einbettbar und aus einem biegsamen Flachmaterial geschaffen, welches zum Zwecke der Verformung Materialeinschnitte (2) bzw. Materialschwächungen aufweist, wobei das Gerüstband (1) vorgefertigte ausdrückbare Haken (4) aufweist.

Das Gerüstband (1) weist von seiner Oberfläche ausragende Haken (4) auf, welche über die Gummi- oder Kunststoffumspritzung (6) in den Innenraum (14) des Aufnahmesockels (17) hineinragen und als Krallen formschlüssig in einen mit dem Klemmprofil (11) zu bestückenden Sockel (7) des Karosserieteiles eingreifen.

## Beschreibung

Die Erfindung betrifft ein verformbares Gerüstband für Gummi- und/oder Kunststofklemmprofile und ein mit diesem hergestelltes Profil.

Klemmprofile der eingangs genannten Gattung werden auf einen Sockel der Karosserie aufgesteckt oder aufgeschoben und gehen mit diesem Sockel eine kraftschlüssige Verbindung ein. Die Größenordnung der Klemmkraft ist abhängig von dem Verformungsgrad den das Profil zuläßt. Hierzu wird der Klemmsockel der Profile gemäß des Standes der Technik mit einem verformbaren Metallband versehen, welches vom Profilmaterial eingebettet ist. Ein solches Profil ist beispielsweise aus der DE-39 35 337 A1 bekannt. Der hier verwendete Klemmsockel besteht unter anderem aus einem verformbaren Metallband, welches in der Kunststoffhülle eingebettet ist. Der Klemmsockel ist annähernd von U-förmiger Gestalt und trägt an den Innenseiten seiner Schenkel, welche den Karosseriesockel umgeben, Lippen oder Nocken, welche als sogenannte Haltevorsprünge auf den Karosseriesockel wirken.

Aus der DE 30 45 675 A1 ist ein Abschluß- und Dichtstreifen mit einem im Querschnitt U-förmigen Körper aus nachgiebigem Material bekannt, von dessen beiden gegenüberliegenden Innenwänden nach Innen gerichtete und in Längsrichtung des Streifens laufende Lippen vorstehen.

Die Profile des druckschriftlich genannten Standes der Technik sind als stellvertretend für den gesamten Stand der Technik zu sehen. Die bekannten Profile sind mit dem Nachteil behaftet, daß die vorgenannten Haltevorsprünge oder Nocken allesamt lediglich einen Kraft- oder Reibschluß auf den Karosseriesockel ausüben können.

Wird eine genügend große Kraft am aufgeschobenen Profil aufgewendet, so wird die Reibkraft überschritten und das aufgesetzte Profil vom Sockel gerissen. Da die Haltevorsprünge oder Nocken keine Eigenschaft haben sich in den Sockel einzukrallen, wenngleich diese in ihrer Richtung als Widerhaken fungieren sollen. Durch entsprechend große Krafteinwirkung wird sogar die Klemmposition des Profils verändert, da dann auch die verwendete Gerüstbandeinlage verformt wird.

Der vorliegenden Erfindung liegt daher die Aufgabe zugrunde ein Gerüstband sowie ein mittels diesem Gerüstband herzustellendens Klemmprofil zu schaffen, das sich beim Versuch dieses vom Karosseriesockel abzuziehen, in den Sockel einkrallt. Es wird somit also das Wesen des Kraft- oder Reibschlusses überschritten und ein Formschluß angezielt.

Diese Aufgabe wird durch ein Gerüstband gemäß des vorgeschlagenen Anspruchs 1 sowie durch ein Profil des vorgeschlagenen Anspruchs 11 gelöst, wobei in den Unteransprüchen besondere Weiterbildungen der Erfindung gekennzeichnet sind.

Erfindungsgemäß wird nun ein verformbares metallisches Gerüstband geschaffen, welches als Strangmaterial in unverformten Zustand hergestellt wird. D.h., es ist ein flächiges Stranggebilde, das aus einzelnen, z.B. beidseits eines Mittelsteges angeordneten Lamellen besteht, welche sich über die gesamte Profillänge erstrecken. Zwischen den Lamellen liegen Einschnitte vor, so daß eine einfache Verformbarkeit während der Profilherstellung gewährleistet ist.

Das Wesen der Erfindung besteht nun unter anderem darin, daß das vorgenannte Gerüstband mittels Perforierungen oder Stanzung hergestellte, ausragbare Haken trägt, die sich von der Oberfläche des Gerüstbandes abheben können. Somit ist gewährleistet, das bei der Herstellung eines Profiles der eingangs genannten Gattung während der Verformung des Gerüstbandes auch die vorperforierten Lamellen mit einem Werkzeug beaufschlagt werden können, die die durch die Perforierung gebildeten Haken ausdrücken. Ein besonderes Merkmal der Erfindung ist nun, daß die ausgedrückten Haken über die Umspritzung, d.h. über das Gummi- oder Kunststoffmaterial, das zur Profilherstellung verwendet wird und das Gerüstband einbetten hinausragen und praktisch Widerhaken, vorzugsweise metallische Widerhaken gegenüber dem Karosseriesockel bilden. Wird nun versucht das Profil vom Karosseriesockel abzuziehen, krallen sich diese Haken in das Material der Karosserie ein und erzeugen einen Formschluß.

Ein Einsatzgebiet der vorliegenden Erfindung besteht beispielsweise für einen Spoiler von Kraftfahrzeugen. Hierbei wird das Profil aus dem Klemmsockel geschaffen, innerhalb dem das erfindungsgemäße Gerüstband zumindest teilweise eingebettet ist, so daß ein U-förmiger oder V-förmiger Klemmsockel gebildet ist, wobei die erfindungsgemäßen Haken über, d.h. also durch die Umspritzung des Gerüstbandes hinausragen. An einem Ende des Sockels trägt das Profil eine Schürze oder Lippe. Der Klemmsockel kann nun auf dem Spoiler, beispielsweise mittels einem geeigneten Werkzeug aufgebracht werden, wobei der U-förmige Klemmsockel fest an den Spoiler angedrückt wird. Hierbei werden auch die Haken in einem gewissen Maße bereits in das Material des Spoilers eingepreßt. Wirkt nun eine Kraft auf das Klemmprofil ein, welche dazu geeignet ist dieses in einer Richtung zu bewegen, welche ein Abzug vom Spoiler zur Folge hätte, krallen sich die herausragenden Haken in das Spoilermaterial ein.

Eine Kraft, die diesen Formschluß zwischen Klemmprofil und Spoiler überschreitet, liegt sodurch bei einem Vielfachen über der Kraft, die im Falle des Kraft- oder Reibschlusses bei Profilen des bekannten Stands der Technik vorliegt.

Anhand der beigefügten Zeichnungen, die besonders bevorzugte Ausführungsbeispiele der Erfindung zeigen, wird diese nun näher beschrieben.

Dabei zeigen:
- Figur 1: das erfindungsgemäße Gerüstband 1.
- Figur 2: einen Querschnitt durch das erfindungsgemäße Gerüstband 1 entlang der in Figur 1 angedeuteten Linie A-A.
- Figur 3: das erfindungsgemäße Klemmprofil 11.
- Figur 4, 5 und 6: verschiedene Ausführungsformen des Gerüstbandes.
- Figur 7 bis 10: verschiedene Formgebungen der Haken 4.

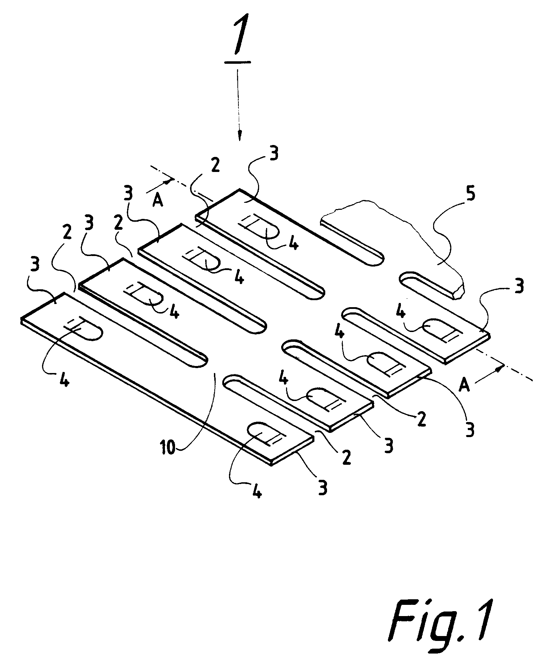

Figur 1 zeigt das erfindungsgemäße Gerüstband 1. Es ist als Strangware ausgebildet und setzt sich in diesem Ausführungsbeispiel aus einem Tragsteg 10 und beidseits daran entlang der Stranglänge angeordneten Lamellen 3, welche durch Einschnitte 2 voneinander getrennt sind, zusammen. Durch diese Ausbildung wird dem Gerüstband eine gewisse Flexibilität und Biegsamkeit verliehen, so daß dieses zu einem ansich gewünschten Querschnitt zurechtgebogen werden kann. Dies kann beispielsweise während der Profilherstellung erfolgen oder bei der Endmontage mit einen eigens hierfür einzusetzenden Werkzeug.

Erfindungsgemäß ist nun vorgesehen, daß das Gerüstband 1 bevorzugterweise in seinen Lamellen 3 entsprechende Perforierungen erhält oder vorgestanzt wird, so daß in den Lamellen 3 ausdrückbare Zungen oder Haken entstehen.

Dieses Gerüstband 1 dient dann als Grundlage für eine spezifizierte Profilherstellung, wobei die Haken 4 später individuell ausrichtbar sind.

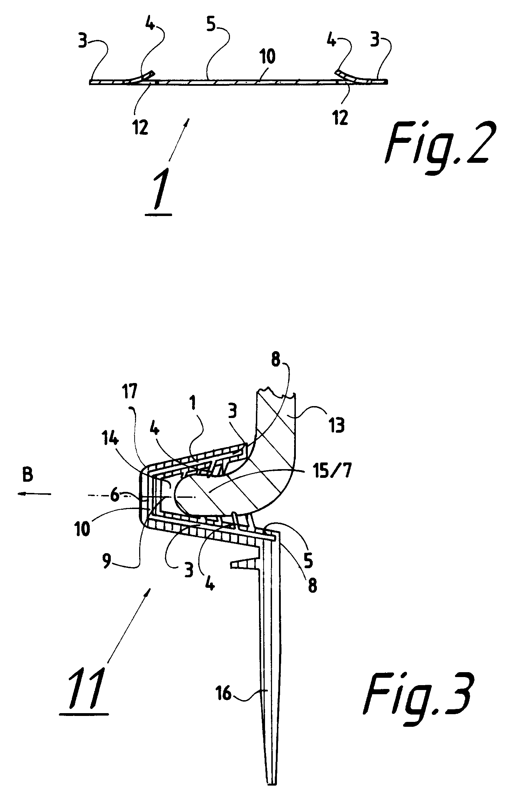

Dies wird beispielsweise aus der Figur 2 deutlich hervorgehoben, welche einen Querschnitt entlang der Schnittlinie A-A gemäß Figur 1 zeigt. Nachdem die Haken 4 über die Oberfläche 5 des Gerüstbandes 1 bzw. der Lamellen 3 ausgedrückt sind, verbleibt in den Lamellen eine Durchbrechung 12.

Die Figur 3 zeigt das erfindungsgemäße Klemmprofil 11 an seinem Einsatzort, beispielsweise einem Spoiler 13 eines Kraftfahrzeugs. Es ist wiederum das Gerüstband 1 zu erkennen, welches hier bereits zu einer U- oder V-Form gefügt ist, so daß sich die Lamellen 3 vom Tragsteg 10 als Schenkel erstrecken, wobei auch die Haken 4 aus ihrer flächigen Gestalt des Gerüstbandes 1 ausgedrückt sind und als Haltevorsprünge ausragen. Das Gerüstband 1 ist von einer Kunststoff- oder Gummiumspritzung 6 eingebettet, wobei lediglich die Haken 4 über diese Umspritzung 6 hinaus in den Innenraum 14 des Aufnahmesockels für die Lippe 15 des Spoilers 13 einragen. Vom Sockelkörper erstreckt sich eine annähernd senkrecht nach unten gerichtete, den ästhetischen Wünschen entsprechend gestaltete Schürze 16, die praktisch die Verlängerung des Spoilers 13 bildet. Wirkt nun eine Kraft auf das Profil 11, welche in Pfeilrichtung B gerichtet ist, so krallen sich die Haken 4 in das Material des Spoilers 13 bzw. dessen Lippe 15 ein und es wird ein Formschluß gebildet, welcher in einer Größenordnung vorliegt, welche über einen Vielfachen eines herkömmlichen Kraft- oder Reibschlusses der bekannten Klemmprofile liegt.

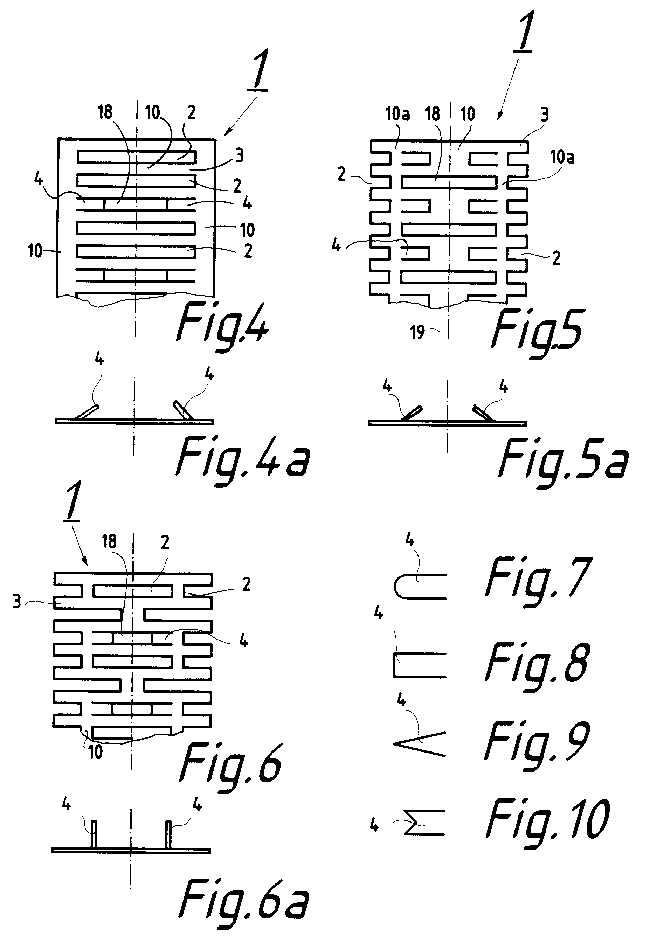

Die Figuren 4 und 4a zeigen eine weitere Ausführungsform des Gerüstbandes 1. Bei dieser Variante besteht das Gerüstband 1 aus einem flächigen Gebilde, welches zum Zwecke der leichteren Verformbarkeit mit Materialschwächungen bzw. Einschnitten 2 versehen ist. Diese Einschnitte 2, welche im vorliegenden Falle von rechteckförmiger Gestalt sind, und als Austanzungen ausgeprägt sind, dienen der gleichen Funktion, wie die Einschnitte 2 zwischen den Lamellen 3 gemäß der Figur 1. Im Ausführungsbeispiel gemäß den Figuren 4 und 4a ist dann das Material zwischen den Einschnitten 2 als Lamellen 3 zu sehen, während die annähernd der Mittelachse angeordneten Materialien als Tragsteg 10 wie auch die Randbereiche als Tragstege 10 zu bezeichnen sind.
In bestimmten Abständen weist das Gerüstband 1 dann Durchbrechungen 18 auf, an die sich beidseits die Haken 4, welche wieder vorperforiert sind, anschließen.

Beim Ausführungsbeispiel gemäß den Figuren 5 und 5a ist ein mittlerer Tragsteg 10 sowie beidseits dieses mittleren Tragstegs 10 angeordnete Randtragstege 10a zu erkennen. Beide Randleisten sind wiederum mit Einschnitten 2 versehen, so daß auch hier die Lamellen 3 entstehen. Zum Zwecke des Verformungsverhaltens sind auch hier wieder Durchbrechungen 18 entlang der Mittelachse 19 eingebracht.

Die Figuren 6 und 6a zeigen eine weitere Ausführungsvariante des Gerüstbandes 1, wobei wiederum gleiche Elemente gleicher Funktior mit den identischen Bezugszeichen wie in den vorhergehenden Figuren gekennzeichnet sind.

Die Figur 7 zeigt einen zungenförmig ausgebildeten Haken 4, während die Figur 8 eine rechteckförmige Formgebung ausweist.
Die Figur 9 zeigt eine spitz auslaufende Formgebung des Hakens 4, in Form eines Dreieckes, während die Figur 10 von krallenförmiger Gestalt ist.

Mit der vorliegenden Erfindung wird ein Gerüstband und ein mittels diesem hergestelltes Klemmprofil geschaffen, mit dem die Retentionsfähigkeit an den Fahrzeugkarosserien um ein Vielfaches erhöht wird.

### Bezugszeichenliste

- 1: Gerüstband
- 2: Einschnitte
- 3: Lamellen
- 4: Haken
- 5: Oberfläche von 1 bzw. 3
- 6: Kunststoff- oder Gummiumspritzung
- 7: Sockel des Karosserieteils
- 8: Schenkelenden
- 9: Profilachse
- 10: Tragsteg
- 11: Klemmprofil
- 12: Durchbrechung
- 13: Spoiler
- 14: Aufnahmeraum
- 15: Lippe von 13
- 16: Schürze
- 17: Aufnahmesockel von 11
- 18: Durchbrechungen
- 19: Mittelachse

## Patentansprüche

1. Verformbares Gerüstband für Gummi- und/oder Kunststoffklemmprofile, welches zumindest teilweise innerhalb des verwendeten Profilmaterials zum Zwecke des Verformungsverhaltens des Fertigprofils einbettbar ist und aus einem biegsamen Flachmaterial geschaffen ist, welches zum Zwecke der Verformung Materialeinschnitte bzw. Materialschwächungen aufweist,
dadurch gekennzeichnet,
daß das Gerüstband (1) vorgefertigte ausdrückbare Haken (4) aufweist.

2. Gerüstband nach Anspruch 1,
dadurch gekennzeichnet,
daß die Haken (4) durch Perforierung oder Stanzung gebildet sind.

3. Gerüstband nach mindestens einem der Ansprüche 1 und 2,
dadurch gekennzeichnet,
daß das Gerüstband (1) als flächiges Teil vorliegt, dessen Haken (4) in unverformten Zustand mit der Oberfläche (5) des Gerüstbandes (1) eine annähernd ebene Fläche bilden.

4. Gerüstband nach mindestens einem der Ansprüche 1 bis 3,
dadurch gekennzeichnet,
daß das Gerüstband (1) zur maschinellen Handhabung mittels eines Biegewerkzeugs geeignet ist.

5. Gerüstband nach mindestens einem der Ansprüche 1 bis 4,
dadurch gekennzeichnet,
daß die Haken (4) mittels einem Biegewerkzeug über die Oberfläche (5) des Gerüstbandes (1) aufbiegbar sind.

6. Verformbares Gerüstband nach mindestens einem der Ansprüche 1 bis 5,
dadurch gekennzeichnet,
daß das Gerüstband (1) aus mindestens einem Tragsteg (10) mit beidseits daran angeordneten Lamellen (3) besteht.

7. Verformbares Gerüstband nach Anspruch 6,
dadurch gekennzeichnet,
daß die ausdrückbaren Haken (4) auf den Lamellen (3) angeordnet sind.

8. Verformbares Gerüstband nach mindestens einem der Ansprüche 1 bis 7,
dadurch gekennzeichnet,
daß die Haken (4) zungenförmig ausgebildet sind.

9. Verformbares Gerüstband nach mindestens einem der Ansprüche 1 bis 8,
dadurch gekennzeichnet,
daß die Haken (4) spitz auslaufend ausgebildet sind.

10. Verformbares Gerüstband nach mindestens einem der Ansprüche 1 bis 9,
dadurch gekennzeichnet,
daß die Haken (4) krallenförmig ausgebildet sind.

11. Gummi- und/oder Kunststoffklemmprofil mit einer verformbaren Gerüstbandeinlage, welches zumindest teilweise innerhalb des Klemmprofilmaterials zum Zwecke des Verformungsverhaltens des Fertigprofils einbettbar ist, und mindestens einen Aufnahmesockel zur Befestigung an der Aufnahmekarosserie aufweist,
dadurch gekennzeichnet,
daß das Gerüstband (1) von seiner Oberfläche ausragende Haken (4) aufweist, welche über die Gummi- oder Kunststoffumspritzung (6) in den Innenraum (14) des Aufnahmesockels (17) hinausragen und als Krallen zum formschlüssigen Eingriff in den, mit dem Klemmprofil (11) zu bestückenden Sockel (7) des Karosserieteiles geeignet sind.

12. Gummi- und/oder Kunststoffklemmprofil nach Anspruch 11,
dadurch gekennzeichnet,
daß das, im Klemmprofil eingebettete Gerüstband (1) auf seiner Oberfläche ausragende Haken (4) aufweisende Lamellen (3) besitzt.

13. Profil nach Anspruch 11 und 12,
dadurch gekennzeichnet,
daß das Klemmprofil (11) einen U-förmigen oder V-förmigen Querschnitt aufweist, derart, daß die eingebogenen Lamellen (3) gegenüberliegende Schenkel bilden, welche die die zueinander gerichteten Haken (4) tragen.

14. Profil nach mindestens einem der Ansprüche 11 bis 13,
dadurch gekennzeichnet,
daß auf die jeweilige Klemmprofillänge durch eine Vielzahl von gegenüberliegenden Haken (4) eine Krallengruppe gebildet ist.

15. Profil nach mindestens einem der Ansprüche 11 bis 14,
dadurch gekennzeichnet,
daß die Lamellen (3) eine, von der parallelen Richtung zueinander abweichende Neigung aufweisen, derart, daß die Schenkelenden (8) leicht öffnend auseinandergerichtet sind.

16. Profil nach mindestens einem der vorhergehenden Ansprüche,
dadurch gekennzeichnet,
daß die Haken (4) gegenüber der Profilachse (9) eine, dem individuellen Anwendungsfall aufweisende Ausragerichtung besitzen.

17. Profil nach mindestens einem der Ansprüche 11 bis 16,
dadurch gekennzeichnet,
daß die Haken (4) gegenüber der Profilachse (9) eine zu dieser abfallende Neigung aufweisen, derart, daß sie zum bestückenden Sockel (7) eines Karosserieteiles als Widerhaken positioniert sind.
